(19) **Europäisches Patentamt / European Patent Office / Office européen des brevets**

(11) **EP 3 736 818 A1**

(12) **EUROPEAN PATENT APPLICATION**
published in accordance with Art. 153(4) EPC

(43) Date of publication:
**11.11.2020 Bulletin 2020/46**

(51) Int Cl.:
*G21C 17/00* (2006.01)    *G21C 17/10* (2006.01)

(21) Application number: **18908103.7**

(22) Date of filing: **31.08.2018**

(86) International application number:
**PCT/JP2018/032378**

(87) International publication number:
**WO 2019/167311 (06.09.2019 Gazette 2019/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.02.2018 JP 2018035575**

(71) Applicant: **MITSUBISHI HEAVY INDUSTRIES, LTD.**
**Chiyoda-ku**
**Tokyo 100-8332 (JP)**

(72) Inventors:
• **KOIKE, Hiroki**
  **Tokyo 108-8215 (JP)**
• **KIRIMURA, Kazuki**
  **Tokyo 108-8215 (JP)**
• **SATO, Daisuke**
  **Tokyo 108-8215 (JP)**
• **KOSAKA, Shinya**
  **Tokyo 108-8215 (JP)**
• **TAKEMOTO, Yuki**
  **Tokyo 108-8215 (JP)**

(74) Representative: **Cabinet Beau de Loménie**
**158, rue de l'Université**
**75340 Paris Cedex 07 (FR)**

(54) **COVARIANCE DATA CREATION DEVICE, REACTOR CORE ANALYSIS DEVICE, COVARIANCE DATA CREATION METHOD, MACRO COVARIANCE ADJUSTMENT METHOD, REACTOR CORE CHARACTERISTIC EVALUATION METHOD, COVARIANCE DATA CREATION PROGRAM, MACRO COVARIANCE ADJUSTMENT PROGRAM, AND REACTOR CORE CHARACTERISTIC EVALUATION PROGRAM**

(57) A covariance data creation apparatus configured to execute assembly calculations on a fuel assembly based on microscopic cross sections, the apparatus executing: a perturbation data generation step S12 of deriving a plurality of perturbation quantities of the microscopic cross sections based on microscopic covariance data that is data regarding uncertainties of the microscopic cross sections, and generating microscopic perturbation data from the derived perturbation quantities of the microscopic cross sections; a macroscopic cross section derivation step S13 of executing the assembly calculations based on the microscopic perturbation data generated at the perturbation data generation step S12, and deriving a plurality of macroscopic cross sections individually corresponding to the perturbation quantities of the microscopic cross sections; and a macroscopic covariance data generation step S14 of generating macroscopic covariance data that is data regarding uncertainties of the macroscopic cross sections based on the macroscopic cross sections derived at the macroscopic cross section derivation step.

**FIG.5**

```
            START
              │
ACQUIRE MICROSCOPIC COVARIANCE DATA      ~S11
              │
GENERATE MICROSCOPIC PERTURBATION
            DATA                         ~S12
              │
EXECUTE ASSEMBLY CALCULATIONS BASED
   ON MICROSCOPIC PERTURBATION DATA      ~S13
              │
GENERATE MACROSCOPIC COVARIANCE
            DATA                         ~S14
              │
GENERATE MACROSCOPIC PERTURBATION
            DATA                         ~S15
              │
              ①
```

**Description**

Field

The present invention relates to a covariance data creation apparatus, a reactor core analysis apparatus, a covariance data creation method, a macroscopic covariance adjustment method, a reactor core characteristic evaluation method, a covariance data creation program, a macroscopic covariance adjustment program, and a reactor core characteristic evaluation program used for performing assembly calculations on a fuel assembly or core calculations on a reactor core including fuel assemblies.

Background

In conventional reactor core analysis (nuclear design calculation) for a reactor core including fuel assemblies, two-step calculations of forward assembly calculations and adjoint core calculations are performed. For the assembly calculations, various calculations are performed considering detailed spatial and energy dependence of neutron flux by using microscopic cross sections of various nuclides as input values, to thereby obtain homogenized nuclear constants (macroscopic cross sections) as output values. The core calculations are performed considering a fuel system of the reactor core by using the macroscopic cross sections calculated by the assembly calculations as input values, to thereby obtain reactor core characteristics of the reactor core as output values.

Such reactor core analysis may employ an adjustment method (data assimilation method) for improving reproducibility by approximating reactor core characteristics as analysis results to reactor core characteristics as measurement results measured by a measurement apparatus installed in the reactor core in order to improve analysis accuracy of the reactor core characteristics (for example, see Patent Literature 1). In the adjustment method, the microscopic cross sections used as the input values for the assembly calculations are to be adjusted. Thus, the reactor core characteristics are calculated by performing the core calculations after performing the assembly calculations using the adjusted microscopic cross sections. Additionally, in the adjustment method, the microscopic cross sections are adjusted to adjust microscopic covariance data that is data regarding uncertainties of the microscopic cross sections as well. Thus, uncertainties of the reactor core characteristics can be evaluated based on the adjusted microscopic covariance data.

Citation List

Non Patent Literature

Non Patent Literature 1: Tomoaki Watanabe et al. (2014). "Cross section adjustment method based on random sampling technique". Journal of Nuclear Science and Technology published by Atomic Energy Society of Japan, vol.51, p.590-599. [Retrieved February 2, 2018], InternetURL:http://www.tandfonline.com/doi/abs/10.1080/0022 3131.2014.882801

Summary

Technical Problem

However in the adjustment method of Non Patent Literature 1, as the assembly calculations need to be performed, calculation cost is increased due to perform the assembly calculations. In particular, the detailed spatial and energy dependence of neutron flux is taken into account in the assembly calculations. This increases calculation load, resulting in larger calculation cost than the core calculations.

Solution to Problem

Thus, an object of the present invention is to provide a covariance data creation apparatus, a reactor core analysis apparatus, a covariance data creation method, a macroscopic covariance adjustment method, a reactor core characteristic evaluation method, a covariance data creation program, a macroscopic covariance adjustment program, and a reactor core characteristic evaluation program enabling prevention of an increase in calculation cost by omitting assembly calculations.

Solution to Problem

The covariance data creation apparatus of the present disclosure includes a first arithmetic unit configured to execute assembly calculations on a fuel assembly based on microscopic cross sections. The first arithmetic unit executes: a perturbation data generation step of deriving a plurality of perturbation quantities of the microscopic cross sections based on microscopic covariance data that is data regarding uncertainties of the microscopic cross sections, and generating microscopic perturbation data from the derived perturbation quantities of the microscopic cross sections; a macroscopic cross section derivation step of executing the assembly calculations based on the microscopic perturbation data generated at the perturbation data generation step, and deriving a plurality of macroscopic cross sections individually corresponding to the perturbation quantities of the microscopic cross sections; and a macroscopic covariance data generation step of generating macroscopic covariance data that is data regarding uncertainties of the macroscopic cross sections based on the macroscopic cross sections derived at the macroscopic cross section derivation step.

The covariance data creation method of the present disclosure generates macroscopic covariance data that is data regarding uncertainties of macroscopic cross sections obtained as output values of assembly calculations on a fuel assembly by a covariance data creation apparatus configured to execute the assembly calculations on the fuel assembly based on microscopic cross sections. The covariance data creation method executes: a perturbation data generation step of deriving a plurality of perturbation quantities of the microscopic cross sections based on microscopic covariance data that is data regarding uncertainties of the microscopic cross sections, and generating microscopic perturbation data from the derived perturbation quantities of the microscopic cross sections; a macroscopic cross section derivation step of executing the assembly calculations based on the microscopic perturbation data generated at the perturbation data generation step, and deriving a plurality of macroscopic cross sections individually corresponding to the perturbation quantities of the microscopic cross sections; and a macroscopic covariance data generation step of generating the macroscopic covariance data based on the macroscopic cross sections derived at the macroscopic cross section derivation step.

The covariance data creation program of the present disclosure is executed by a covariance data creation apparatus configured to execute assembly calculations on a fuel assembly based on microscopic cross sections. The covariance data creation program comprises: a perturbation data generation step of deriving a plurality of perturbation quantities of the microscopic cross sections based on microscopic covariance data that is data regarding uncertainties of the microscopic cross sections, and generating microscopic perturbation data from the derived perturbation quantities of the microscopic cross sections; a macroscopic cross section derivation step of executing the assembly calculations based on the microscopic perturbation data generated at the perturbation data generation step, and deriving a plurality of macroscopic cross sections individually corresponding to the perturbation quantities of the microscopic cross sections; and a macroscopic covariance data generation step of generating macroscopic covariance data that is data regarding uncertainties of the macroscopic cross sections based on the macroscopic cross sections derived at the macroscopic cross section derivation step.

In accordance with the above configurations, the macroscopic covariance data can be generated. By using the generated macroscopic covariance data, core calculations based on the macroscopic cross sections can be performed. Thus, for example, even when the adjustment method in Non Patent Literature 1 described above is applied, the macroscopic covariance can be targeted for adjustment without targeting the microscopic covariance for adjustment. This allows the core calculations to be performed without performing the assembly calculations. Therefore, the assembly calculations can be omitted. The use of the generated macroscopic covariance data can prevent an increase in calculation cost.

It is preferable that as a calculation condition for executing the assembly calculations based on the microscopic perturbation data, a predetermined parameter as a representative is previously selected as a representative parameter from parameters regarding a reactor core state of a reactor core including the fuel assembly, and at the macroscopic cross section derivation step, the assembly calculations based on the microscopic perturbation data are executed using the selected representative parameter as the calculation condition.

In accordance with the above configuration, the assembly calculations can be executed by selecting the necessary parameter for generating the covariance data. In other words, the assembly calculations can be executed without using unnecessary parameters for generating the covariance data. This reduces calculation load. Note that a parameter highly dependent on (easily influenced by) the macroscopic covariance data to be generated is selected as the representative parameter. Thus, the macroscopic covariance data can be appropriately generated.

The reactor core analysis apparatus of the present disclosure comprises a second arithmetic unit configured to execute core calculations on a reactor core based on the macroscopic cross sections by using the macroscopic covariance data created by the covariance data creation apparatus. Perturbation quantities of the macroscopic cross sections derived based on the macroscopic covariance data being previously generated as macroscopic perturbation data. The second arithmetic unit executes: a reactor core characteristic derivation step of executing the core calculations based on the macroscopic perturbation data, and deriving a plurality of reactor core characteristics individually corresponding to the perturbation quantities of the macroscopic cross sections; a sensitivity data acquisition step of acquiring a relation between a change in the macroscopic cross sections and a change in the reactor core characteristics accompanying the change in the macroscopic cross sections, as sensitivity data; a measurement data acquisition step of acquiring reactor core characteristics of the reactor core measured by a measurement apparatus measuring the reactor core characteristics, as reactor core characteristic measurement data; an adjustment quantity derivation step of deriving an adjustment quantity of the macroscopic covariance data from a predetermined equation based on the sensitivity data; and an adjusted macroscopic covariance derivation step of deriving adjusted macroscopic covariance data adjusted based on the adjustment quantity derived at the adjustment quantity derivation step.

The macroscopic covariance adjustment method of the present disclosure adjusts macroscopic covariance data that is data regarding uncertainties of macroscopic cross sections by a reactor core analysis apparatus configured to execute core calculations on a reactor core based on the macroscopic cross sections. Perturbation quantities of the macroscopic cross sections derived based on the macroscopic covariance data being previously generated as macroscopic perturbation data. The macroscopic covariance adjustment method executes: a reactor core characteristic derivation step of executing the core calculations based on the macroscopic perturbation data, and deriving a plurality of reactor core characteristics individually corresponding to the perturbation quantities of the macroscopic cross sections; a sensitivity data acquisition step of acquiring a relation between a change in the macroscopic cross sections and a change in the reactor core characteristics accompanying the change in the macroscopic cross sections, as sensitivity data; a measurement data acquisition step of acquiring reactor core characteristics of the reactor core measured by a measurement apparatus measuring the reactor core characteristics, as reactor core characteristic measurement data; an adjustment quantity derivation step of deriving an adjustment quantity of the macroscopic covariance data from a predetermined equation based on the sensitivity data; and an adjusted macroscopic covariance derivation step of deriving adjusted macroscopic covariance data adjusted based on the adjustment quantity derived at the adjustment quantity derivation step.

The macroscopic covariance adjustment program of the present disclosure is executed by a reactor core analysis apparatus configured to execute core calculations on a reactor core based on macroscopic cross sections. Perturbation quantities of the macroscopic cross sections derived based on macroscopic covariance data that is data regarding uncertainties of the macroscopic cross sections being previously generated as macroscopic perturbation data. The macroscopic covariance adjustment program comprises: a reactor core characteristic derivation step of executing the core calculations based on the macroscopic perturbation data, and deriving a plurality of reactor core characteristics individually corresponding to the perturbation quantities of the macroscopic cross sections; a sensitivity data acquisition step of acquiring a relation between a change in the macroscopic cross sections and a change in the reactor core characteristics accompanying the change in the macroscopic cross sections, as sensitivity data; a measurement data acquisition step of acquiring reactor core characteristics of the reactor core measured by a measurement apparatus measuring the reactor core characteristics, as reactor core characteristic measurement data; an adjustment quantity derivation step of deriving an adjustment quantity of the macroscopic covariance data from a predetermined equation based on the sensitivity data; and an adjusted macroscopic covariance derivation step of deriving adjusted macroscopic covariance data adjusted based on the adjustment quantity derived at the adjustment quantity derivation step.

In accordance with the above configurations, the adjusted macroscopic covariance can be derived. Here, the adjusted macroscopic covariance can be derived by performing the core calculations without performing the assembly calculations. Therefore, the assembly calculations can be omitted, which leads to prevention of an increase in calculation cost.

In the reactor core analysis apparatus, perturbation quantities of the macroscopic cross sections derived based on the adjusted macroscopic covariance data are previously generated as adjusted macroscopic perturbation data. The second arithmetic unit further executes: a reactor core characteristic derivation step of executing the core calculations based on the adjusted macroscopic perturbation data, and deriving a plurality of reactor core characteristics individually corresponding to the perturbation quantities of the macroscopic cross sections; and a reactor core characteristic covariance data generation step of generating reactor core characteristic covariance data that is data regarding uncertainties of the reactor core characteristics based on the reactor core characteristics derived at the reactor core characteristic derivation step.

The reactor core characteristic evaluation method of the present disclosure evaluates reactor core characteristics of a reactor core by a reactor core analysis apparatus configured to evaluate the reactor core characteristics of the reactor core by executing core calculations on the reactor core based on macroscopic cross sections. Perturbation quantities of the macroscopic cross sections derived based on the adjusted macroscopic covariance data derived by the macroscopic covariance adjustment method being previously generated as adjusted macroscopic perturbation data. The reactor core characteristic evaluation method executes: a reactor core characteristic derivation step of executing the core calculations based on the adjusted macroscopic perturbation data, and deriving a plurality of reactor core characteristics individually corresponding to the perturbation quantities of the macroscopic cross sections; and a reactor core characteristic covariance data generation step of generating reactor core characteristic covariance data that is data regarding uncertainties of the reactor core characteristics based on the reactor core characteristics derived at the reactor core characteristic derivation step.

The reactor core characteristic evaluation program of the present disclosure is executed by a reactor core analysis apparatus configured to execute core calculations on a reactor core based on macroscopic cross sections, perturbation quantities of the macroscopic cross sections derived based on the adjusted macroscopic covariance data derived by the macroscopic covariance adjustment program being previously generated as adjusted macroscopic perturbation data. The reactor core characteristic evaluation program comprises: a reactor core characteristic derivation step of executing the core calculations based on the adjusted macroscopic perturbation data, and deriving a plurality of reactor core characteristics individually corresponding to the perturbation quantities of the macroscopic cross sections; and a reactor core characteristic covariance data generation step of generating reactor core characteristic covariance data that is data regarding uncertainties of the reactor core characteristics based on the reactor core characteristics derived at the reactor core characteristic derivation step.

In accordance with the above configurations, the reactor core characteristic covariance data can be generated by deriving the macroscopic cross sections using the adjusted macroscopic covariance data, and deriving the reactor core characteristics corresponding to the derived macroscopic cross sections. Here, the reactor core characteristic covariance data can be derived by performing the core calculations without performing the assembly calculations. Therefore, the assembly calculations can be omitted, which leads to prevention of an increase in calculation cost. Additionally, the uncertainties of the reactor core characteristics can be evaluated by using the reactor core characteristic covariance data.

Brief Description of Drawings

FIG. 1 is a schematic configuration diagram schematically illustrating a covariance data creation apparatus according to the present embodiment.
FIG. 2 is a schematic configuration diagram schematically illustrating a reactor core analysis apparatus according to the present embodiment.
FIG. 3 is an explanatory view schematically illustrating a reactor core as an analysis target.
FIG. 4 is a cross-sectional view of a fuel assembly as an analysis target cut along a plane perpendicular to an axial direction.
FIG. 5 is a flowchart regarding creation of unadjusted macroscopic covariance data.
FIG. 6 is a flowchart regarding adjustment of macroscopic covariance.
FIG. 7 is a flowchart regarding creation of reactor core characteristic covariance data.

Description of Embodiments

Hereinafter, an embodiment according to the present invention will be described in detail based on the drawings. Note that the embodiment is not intended to limit the present invention. Additionally, components in the following embodiment include components replaceable and easily conceivable by a person skilled in the art or components substantially identical therewith. Furthermore, the following components can be combined together as appropriate, and when there are a plurality of embodiments, the respective embodiments can be combined together.

[Present embodiment]

A covariance data creation apparatus 10 and a reactor core analysis apparatus 20 according to the present embodiment are used for nuclear design calculation. The covariance data creation apparatus 10 is an apparatus configured to perform assembly calculations using microscopic cross sections as input values to generate covariance data of macroscopic cross sections used as input values for core calculations. Additionally, the reactor core analysis apparatus 20 is an apparatus configured to perform core calculations using the macroscopic cross sections as input values to generate values regarding characteristics of a reactor core (hereinafter, simply referred to as reactor core characteristics) as output values.

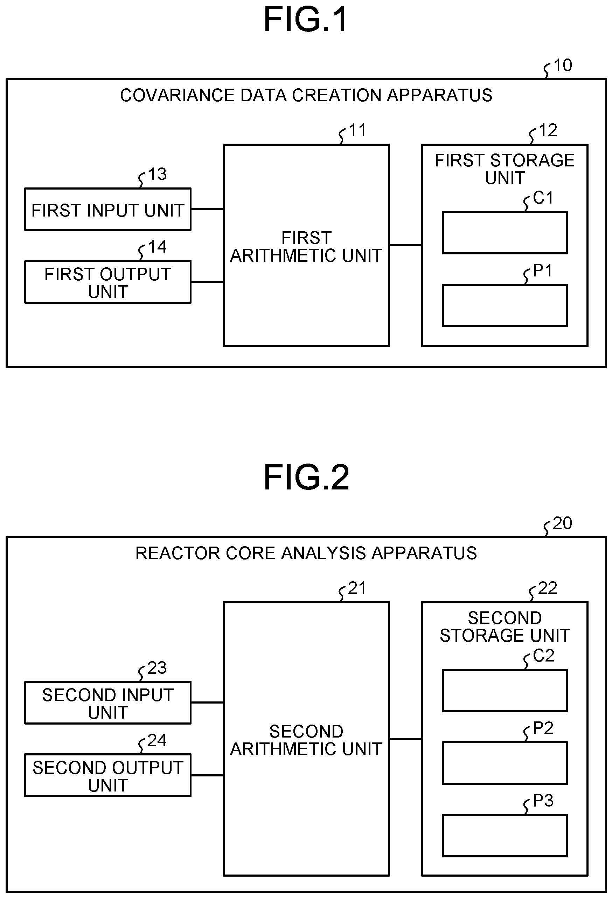

FIG. 1 is a schematic configuration diagram schematically illustrating the covariance data creation apparatus according to the present embodiment. The covariance data creation apparatus 10 includes a first arithmetic unit 11 configured to carry out arithmetic operations by executing various computer programs, a first storage unit 12 configured to store various computer programs and data, a first input unit 13 formed of an input device such as a keyboard, and a first output unit 14 formed of an output device such as a monitor. Note that the covariance data creation apparatus 10 may be formed of a single apparatus, an apparatus integrated with the reactor core analysis apparatus 20, or a plurality of apparatuses combining an arithmetic apparatus, a data server or the like, and is not limited to a particular configuration.

The first storage unit 12 stores various computer programs such as a lattice calculation code C1 used for calculating the macroscopic cross sections and a covariance data creation program P1 used for creating the macroscopic covariance data. The first storage unit 12 also stores data such as a cross section library collecting the cross sections, the macroscopic cross sections derived by the assembly calculations, and the macroscopic covariance data derived based on the macroscopic cross sections.

FIG. 2 is a schematic configuration diagram schematically illustrating the reactor core analysis apparatus. As illustrated in FIG. 1, the reactor core analysis apparatus 20 includes a second arithmetic unit 21 configured to carry out arithmetic operations by executing various computer programs, a second storage unit 22 configured to store various computer programs and data, a second input unit 23 formed of an input device such as a keyboard, and a second output unit 24 formed of an output device such as a monitor. Note that the reactor core analysis apparatus 20 may be formed of a single apparatus, an apparatus integrated with the covariance data creation apparatus 10, or a plurality of apparatuses combining an arithmetic apparatus, a data server or the like, and is not limited to a particular configuration, similarly to the covariance data creation apparatus 10.

The second storage unit 22 stores various computer programs such as a reactor core calculation code C2 used for calculating the reactor core characteristics, a macroscopic covariance adjustment program P2 used for adjusting the macroscopic cross sections as the input values for the core calculations, and a reactor core characteristic evaluation program P3 used for creating reactor core characteristic covariance data. The second storage unit 22 also stores data such as sensitivity data that is data regarding a change in the reactor core characteristics accompanying a change in the macroscopic cross sections, reactor core characteristic measurement data measured by a measurement apparatus for measuring the reactor core characteristics, an adjustment quantity for adjusting the macroscopic covariance, and the reactor core characteristic covariance data derived based on the reactor core characteristics.

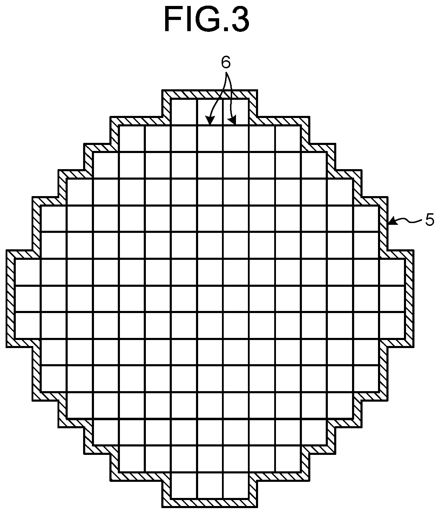

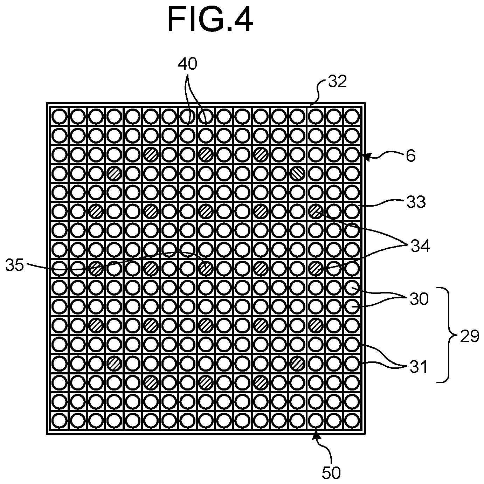

A reactor core 5 as an analysis target will now be described with reference to FIGS. 3 and 4. FIG. 3 is an explanatory view schematically illustrating the reactor core as an analysis target. FIG. 4 is a cross-sectional view of a fuel assembly as an analysis target cut along a plane perpendicular to an axial direction. As illustrated in FIG. 3, the reactor core 5 as a target of reactor core design is contained in a nuclear reactor. The reactor core 5 is composed of a plurality of fuel assemblies 6. Note that fuel exchange is performed for each fuel assembly 6.

As illustrated in FIG. 4, nn The fuel assembly 6 is filled therein with a moderator (coolant) 33, and is configured so as to allow a plurality of control rods 34 and an in-core nuclear instrumentation 35 to be inserted thereinto. For each fuel rod 29, the fuel pellets 30 having a cylindrical shape are arranged in its axial direction, and its outside is covered with the cladding tube 31.

The fuel assembly 6 has a quadrangular cross-sectional shape, and is composed of, for example, $17\times17$ cells 40. The control rods 34 are inserted into 24 cells 40 out of the $17\times17$ cells 40, and the in-core nuclear instrumentation 35 into a cell 40 in the assembly center. The cell 40 into which the control rod 34 is inserted is called a control rod guide tube, and the cell 40 into which the in-core nuclear instrumentation 35 is inserted is called an instrumentation guide tube. Additionally, the fuel rods 29 are inserted into the other cells 40. When the fuel assembly 6 is used for a boiling water reactor (BWR), the outside of the fuel assembly 6 is covered with a channel box. Meanwhile, when the fuel assembly 6 is used for a pressurized water reactor (PWR), the outside of the fuel assembly 6 is uncovered. An inter-assembly gap 32 exists outside the channel box in the BWR, and outside the fuel assembly 6 in the PWR.

Next, the lattice calculation code C1 and the reactor core calculation code C2 used for the nuclear design calculation will be described. The lattice calculation code C1 is a calculation code used for the assembly calculation, and the reactor core calculation code C2 is a calculation code used for the core calculation.

The lattice calculation code C1 is used to perform various calculations such as resonance calculation, neutron transport calculation, burnup calculation and assembly (nuclear constant) calculation based on specification data regarding the fuel assembly 6 and the microscopic cross sections acquired from the cross section library stored in the first storage unit 12 of the covariance data creation apparatus 10 by using the microscopic cross sections as input values. Note that examples of the specification data include a radius of the fuel rod, an inter-assembly gap, a fuel composition, a fuel temperature, and a moderator temperature.

The lattice calculation code C1 is a code employing a quadrangular geometric shape, which is a cross section of the fuel assembly 6 cut along a plane perpendicular to the axial direction, as a two-dimensional analysis target area 50 (see FIG. 4), and enabling calculation of nuclear constants including the macroscopic cross sections in the analysis target area 50. Note that the nuclear constants are input values used for the reactor core calculation code C2, and examples of the nuclear constants include a diffusion coefficient, an absorption cross section, a removal cross section, and a formation cross section. That is, the macroscopic cross sections as the input values for the core calculations are generated by performing the assembly calculations using the lattice calculation code C1.

The reactor core calculation code C2 is used to perform the core calculations by setting the calculated nuclear constants to rectangular-parallelepiped small-volume fuel nodes (not illustrated) obtained by axially dividing the fuel assembly 6 into a plurality of segments. The fuel nodes represent the reactor core. The reactor core calculation code C2 is a code enabling evaluation of nuclear characteristics in the reactor core (the reactor core characteristics) such as a critical boron concentration, a power distribution, and a reactivity coefficient by performing the core calculations.

The covariance data creation apparatus 10 causes the first arithmetic unit 11 to execute the lattice calculation code C1 stored in the first storage unit 12 based on an input parameter inputted from the first input unit 13. The covariance data creation apparatus 10 thereby performs the assembly calculations by using the lattice calculation code C1 to calculate the macroscopic cross sections in the analysis target area 50 of the fuel assembly 6. Additionally, the reactor core analysis apparatus 20 causes the second arithmetic unit 21 to execute the reactor core calculation code C2 stored in the second storage unit 22 based on the calculated macroscopic cross sections. The reactor core analysis apparatus 20 thereby performs the core calculations by using the reactor core calculation code C2 to derive the reactor core characteristics of the reactor core 5. The reactor core analysis apparatus 20 performs macroscopic covariance adjustment and reactor core characteristic evaluation based on the derived reactor core characteristics. That is, the reactor core analysis apparatus 20 has a function of adjusting the macroscopic covariance and a function of evaluating the reactor core characteristics, and the second arithmetic unit 21 is an arithmetic unit capable of executing these functions. Note that the reactor core analysis apparatus 20 may be separated into an apparatus having the function of adjusting the macroscopic covariance and an apparatus having the function of evaluating the reactor core characteristics, and is not limited to a particular configuration.

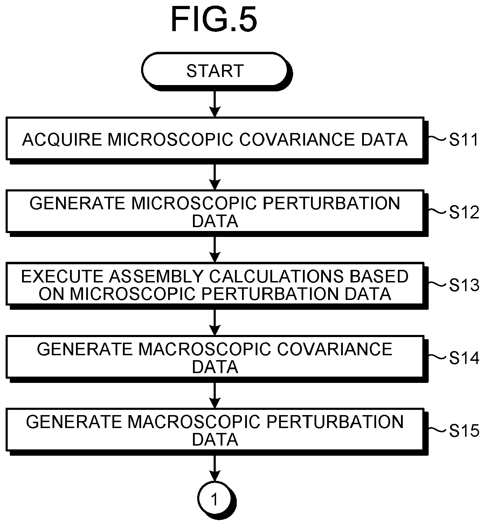

Next, processing steps for generating the macroscopic covariance data by the covariance data creation apparatus 10 described above will be described with reference to FIG. 5. The covariance data creation apparatus 10 executes the covariance data creation program P1 to execute the processing steps for generating the unadjusted macroscopic covariance data.

In the covariance data creation apparatus 10, the first arithmetic unit 11 first acquires microscopic covariance data that is data regarding uncertainties of the microscopic cross sections in the cross section library stored in the first storage unit 12 (Step S11: Data acquisition step). The first arithmetic unit 11 then derives N sets of perturbation quantities of the microscopic cross sections by random sampling technique by using the microscopic covariance data. Deriving the perturbation quantities of the microscopic cross sections by the random sampling technique enables acquisition of thermal-hydraulics and burnup feedback effects noticeable in the reactor core of the light water reactor. The first arithmetic unit 11 generates microscopic perturbation data from the derived N sets of perturbation quantities of the microscopic cross sections (Step S12: Microscopic perturbation data generation step). The first arithmetic unit 11 stores the generated microscopic perturbation data in the first storage unit 12.

Subsequently, the first arithmetic unit 11 executes the assembly calculations based on the generated microscopic perturbation data, i.e., the respective microscopic cross sections having the first to Nth perturbation quantities to derive N sets of macroscopic cross sections individually corresponding to the first to Nth perturbation quantities (Step S13: Macroscopic cross section derivation step). As a calculation condition for executing the assembly calculations, a predetermined parameter as a representative is previously selected as a representative parameter from parameters regarding a reactor core state of the reactor core 5 including the fuel assemblies 6. At the macroscopic cross section derivation step S13, the assembly calculations based on the microscopic perturbation data are executed using the selected representative parameter as the calculation condition. Selecting the parameter can decrease the number of parameter combinations and reduce assembly calculation load. Note that a parameter highly dependent on the macroscopic covariance data to be generated is selected as the representative parameter. The first arithmetic unit 11 then generates the macroscopic covariance data that is data regarding uncertainties of the macroscopic cross sections based on the derived N sets of macroscopic cross sections (Step S14: Macroscopic covariance data generation step). The macroscopic covariance data is, for example, a standard deviation of the derived N sets of macroscopic cross sections. The first arithmetic unit 11 stores the generated macroscopic covariance data in the first storage unit 12.

Subsequently, the first arithmetic unit 11 derives N sets of perturbation quantities of the macroscopic cross sections by the random sampling technique by using the generated macroscopic covariance data. The first arithmetic unit 11 generates macroscopic perturbation data from the derived N sets of perturbation quantities of the microscopic cross sections (Step S15: Macroscopic perturbation data generation step). The first arithmetic unit 11 stores the generated macroscopic perturbation data in the first storage unit 12, and outputs the generated macroscopic perturbation data to the reactor core analysis apparatus 20.

As described above, the covariance data creation apparatus 10 executes the processing steps for generating the macroscopic covariance data to develop the uncertainties of the microscopic cross sections into the uncertainties of the macroscopic cross sections and generate the macroscopic covariance data regarding the uncertainties of the macroscopic cross sections. In generating the macroscopic covariance data alone, the step S15 may be omitted.

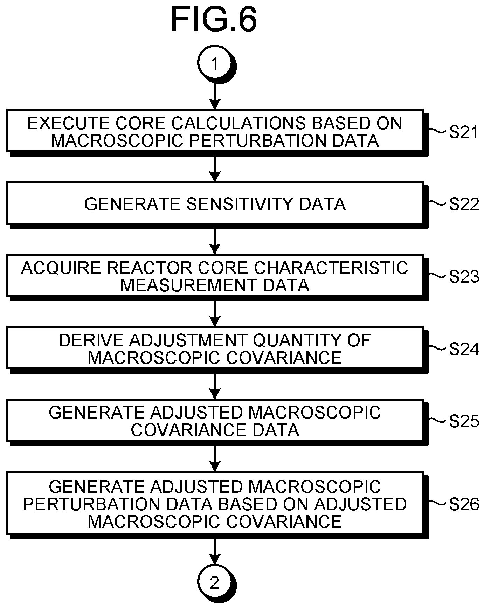

Next, processing steps for adjusting the macroscopic covariance by the reactor core analysis apparatus 20 described above will be described with reference to FIG. 6. The reactor core analysis apparatus 20 executes the macroscopic covariance adjustment program P2 to execute the processing steps for adjusting the macroscopic covariance. In the reactor core analysis apparatus 20, the macroscopic perturbation data outputted from the covariance data creation apparatus 10 is previously stored in the second storage unit 22.

In the reactor core analysis apparatus 20, the second arithmetic unit 21 first executes the core calculations based on the macroscopic perturbation data stored in the second storage unit 22, i.e., the respective macroscopic cross sections having the first to Nth perturbation quantities to derive N sets of reactor core characteristics individually corresponding to the first to Nth perturbation quantities (Step S21: Reactor core characteristic derivation step). The second arithmetic unit 21 then acquires sensitivity data, by deriving, as the sensitivity data, a relation between a change in the N sets of macroscopic cross sections and a change in the N sets of reactor core characteristics accompanying the change in the N sets of macroscopic cross sections based on the derived N reactor core characteristics (Step S22: Sensitivity data acquisition step). The sensitivity data may be stored in the second storage unit 22.

Subsequently, the second arithmetic unit 21 acquires reactor core characteristics measured by a measurement apparatus for measuring the reactor core characteristics of the reactor core as reactor core characteristic measurement data (Step S23: Measurement data acquisition step). The reactor core characteristic measurement data is data previously measured a few cycles before, and is stored in the second storage unit 22.

After acquiring the sensitivity data and the reactor core characteristic measurement data, the second arithmetic unit 21 derives an adjustment quantity for adjusting the macroscopic covariance from an equation (1) described below based on the acquired sensitivity data (Step S24: Adjustment quantity derivation step).

$$\Delta M_{ADJ} = \left(\frac{1}{N}\Delta T \Delta R^T\right)\left[\left(\frac{1}{N}\Delta R \Delta R^T\right) + V_e + V_m\right]^{-1}\left(\frac{1}{N}\Delta T \Delta R^T\right)^T \quad (1)$$

Here, the equation (1) is defined as follows:

$\Delta M_{adj}$: adjustment quantity of macroscopic covariance
$\Delta T$: perturbation quantity of macroscopic cross section (as the input value)
$\Delta R$: perturbation quantity of reactor core characteristic (as the output value) in accordance with the perturbation of the macroscopic cross section
$V_e$: uncertainty of reactor core characteristic as a measured value
$V_m$: uncertainty of reactor core characteristic as a calculated value due to the calculation method (m)

The second arithmetic unit 21 adjusts the unadjusted macroscopic covariance ($M_0$) based on the adjustment quantity ($\Delta M_{adj}$) calculated by the equation (1) and derives an adjusted macroscopic covariance M from an equation "$M=M_0+\Delta M_{adj}$" (Step S25: Adjusted macroscopic covariance derivation step). The second arithmetic unit 21 generates adjusted macroscopic perturbation data by the random sampling technique based on the adjusted macroscopic covariance (Step S26: Adjusted macroscopic perturbation data generation step). The reactor core analysis apparatus 20 executes the processing steps for adjusting the macroscopic covariance as described above. The second arithmetic unit 21 stores the generated adjusted macroscopic perturbation data in the second storage unit 22.

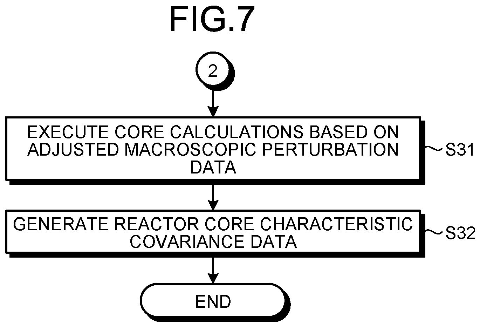

Next, processing steps for generating the reactor core characteristic covariance data by the reactor core analysis apparatus 20 described above will be described with reference to FIG. 7. The reactor core analysis apparatus 20 executes the reactor core characteristic evaluation program P3 to execute the processing steps for generating the reactor core characteristic covariance data.

In the reactor core analysis apparatus 20, the second arithmetic unit 21 first executes the core calculations based on the adjusted macroscopic perturbation data stored in the second storage unit 22, i.e., the respective macroscopic cross sections having the first to Nth perturbation quantities to derive N sets of reactor core characteristics individually corresponding to the first to Nth perturbation quantities (Step S31: Reactor core characteristic derivation step). The second arithmetic unit 21 then generates the reactor core characteristic covariance data that is data regarding uncertainties of the reactor core characteristics based on the derived N sets of reactor core characteristics (Step S32: Reactor core characteristic covariance data generation step). The reactor core characteristic covariance data is, for example, a standard deviation of the derived N reactor core characteristics. The second arithmetic unit 21 stores the generated reactor core characteristic covariance data in the second storage unit 22.

As described above, the reactor core analysis apparatus 20 executes the processing steps for generating the reactor core characteristic covariance data to develop the uncertainties of the macroscopic cross sections into the uncertainties of the reactor core characteristics and generate the reactor core characteristic covariance data regarding the uncertainties of the reactor core characteristics.

As described above, in accordance with the present embodiment, the covariance data creation apparatus 10 can generate the macroscopic covariance data. By using the generated macroscopic covariance data, the reactor core analysis apparatus 20 can perform the core calculations based on the macroscopic cross sections. Thus, the macroscopic covariance can be targeted for adjustment in evaluating the uncertainties of the reactor core characteristics. This allows the core calculations to be performed without performing the assembly calculations. Therefore, the assembly calculations can be omitted, which leads to prevention of an increase in calculation cost.

Additionally, in accordance with the present embodiment, the assembly calculations can be executed using the representative parameter as the calculation condition. Thus, the assembly calculations can be executed without using unnecessary parameters for generating the covariance data. This reduces calculation load.

Moreover, in accordance with the present embodiment, the adjusted macroscopic covariance can be derived by adjusting the macroscopic covariance. Here, the adjusted macroscopic covariance can be derived by performing the core calculations without performing the assembly calculations. Therefore, the assembly calculations can be omitted, which leads to prevention of an increase in calculation cost.

Furthermore, in accordance with the present embodiment, the reactor core characteristic covariance data can be generated by deriving the macroscopic cross sections using the adjusted macroscopic covariance data, and deriving the reactor core characteristics corresponding to the derived macroscopic cross sections. Here, the reactor core characteristic covariance data can be derived by performing the core calculations without performing the assembly calculations. Therefore, the assembly calculations can be omitted, which leads to prevention of an increase in calculation cost. Additionally, the uncertainties of the reactor core characteristics can be evaluated by using the reactor core characteristic covariance data.

Reference Signs List

| | |
|---|---|
| 5 | REACTOR CORE |
| 6 | FUEL ASSEMBLY |
| 10 | COVARIANCE DATA CREATION APPARATUS |
| 11 | FIRST ARITHMETIC UNIT |
| 12 | FIRST STORAGE UNIT |
| 13 | FIRST INPUT UNIT |
| 14 | FIRST OUTPUT UNIT |
| 20 | REACTOR CORE ANALYSIS APPARATUS |
| 21 | SECOND ARITHMETIC UNIT |
| 22 | SECOND STORAGE UNIT |
| 23 | SECOND INPUT UNIT |
| 24 | SECOND OUTPUT UNIT |
| 29 | FUEL ROD |
| 30 | FUEL PELLET |
| 31 | CLADDING TUBE |
| 32 | INTER-ASSEMBLY GAP |
| 33 | MODERATOR |
| 34 | CONTROL ROD |
| 35 | IN-CORE NUCLEAR INSTRUMENTATION |
| 40 | CELL |
| C1 | LATTICE CALCULATION CODE |
| C2 | REACTOR CORE CALCULATION CODE |
| P1 | COVARIANCE DATA CREATION PROGRAM |
| P2 | MACROSCOPIC COVARIANCE ADJUSTMENT PROGRAM |
| P3 | REACTOR CORE CHARACTERISTIC EVALUATION PROGRAM |

**Claims**

1. A covariance data creation apparatus comprising a first arithmetic unit configured to execute assembly calculations on a fuel assembly based on microscopic cross sections, the first arithmetic unit executing:

a perturbation data generation step of deriving a plurality of perturbation quantities of the microscopic cross sections based on microscopic covariance data that is data regarding uncertainties of the microscopic cross sections, and generating microscopic perturbation data from the derived perturbation quantities of the microscopic cross sections;

a macroscopic cross section derivation step of executing the assembly calculations based on the microscopic perturbation data generated at the perturbation data generation step, and deriving a plurality of macroscopic cross sections individually corresponding to the perturbation quantities of the microscopic cross sections; and

a macroscopic covariance data generation step of generating macroscopic covariance data that is data regarding uncertainties of the macroscopic cross sections based on the macroscopic cross sections derived at the macroscopic cross section derivation step.

2. The covariance data creation apparatus according to claim 1, wherein
as a calculation condition for executing the assembly calculations based on the microscopic perturbation data, a predetermined parameter as a representative is previously selected as a representative parameter from parameters regarding a reactor core state of a reactor core including the fuel assembly, and
at the macroscopic cross section derivation step,
the assembly calculations based on the microscopic perturbation data are executed using the selected representative parameter as the calculation condition.

3. A reactor core analysis apparatus comprising a second arithmetic unit configured to execute core calculations on a reactor core based on the macroscopic cross sections by using the macroscopic covariance data created by the covariance data creation apparatus according to claim 1 or 2,
perturbation quantities of the macroscopic cross sections derived based on the macroscopic covariance data being previously generated as macroscopic perturbation data,
the second arithmetic unit executing:

a reactor core characteristic derivation step of executing the core calculations based on the macroscopic perturbation data, and deriving a plurality of reactor core characteristics individually corresponding to the perturbation quantities of the macroscopic cross sections;
a sensitivity data acquisition step of acquiring a relation between a change in the macroscopic cross sections and a change in the reactor core characteristics accompanying the change in the macroscopic cross sections, as sensitivity data;
a measurement data acquisition step of acquiring reactor core characteristics of the reactor core measured by a measurement apparatus measuring the reactor core characteristics, as reactor core characteristic measurement data;
an adjustment quantity derivation step of deriving an adjustment quantity of the macroscopic covariance data from a predetermined equation based on the sensitivity data; and
an adjusted macroscopic covariance derivation step of deriving adjusted macroscopic covariance data adjusted based on the adjustment quantity derived at the adjustment quantity derivation step.

4. The reactor core analysis apparatus according to claim 3, wherein
perturbation quantities of the macroscopic cross sections derived based on the adjusted macroscopic covariance data are previously generated as adjusted macroscopic perturbation data, and
the second arithmetic unit further executes:

a reactor core characteristic derivation step of executing the core calculations based on the adjusted macroscopic perturbation data, and deriving a plurality of reactor core characteristics individually corresponding to the perturbation quantities of the macroscopic cross sections; and
a reactor core characteristic covariance data generation step of generating reactor core characteristic covariance data that is data regarding uncertainties of the reactor core characteristics based on the reactor core characteristics derived at the reactor core characteristic derivation step.

5. A covariance data creation method of generating macroscopic covariance data that is data regarding uncertainties of macroscopic cross sections obtained as output values of assembly calculations on a fuel assembly by a covariance data creation apparatus configured to execute the assembly calculations on the fuel assembly based on microscopic cross sections, the covariance data creation method executing:

a perturbation data generation step of deriving a plurality of perturbation quantities of the microscopic cross sections based on microscopic covariance data that is data regarding uncertainties of the microscopic cross sections, and generating microscopic perturbation data from the derived perturbation quantities of the microscopic cross sections;
a macroscopic cross section derivation step of executing the assembly calculations based on the microscopic perturbation data generated at the perturbation data generation step, and deriving a plurality of macroscopic cross sections individually corresponding to the perturbation quantities of the microscopic cross sections; and
a macroscopic covariance data generation step of generating the macroscopic covariance data based on the macroscopic cross sections derived at the macroscopic cross section derivation step.

6. A macroscopic covariance adjustment method of adjusting macroscopic covariance data that is data regarding uncertainties of macroscopic cross sections by a reactor core analysis apparatus configured to execute core calculations on a reactor core based on the macroscopic cross sections,
perturbation quantities of the macroscopic cross sections derived based on the macroscopic covariance data being previously generated as macroscopic perturbation data,
the macroscopic covariance adjustment method executing:

a reactor core characteristic derivation step of executing the core calculations based on the macroscopic perturbation data, and deriving a plurality of reactor core characteristics individually corresponding to the perturbation quantities of the macroscopic cross sections;
a sensitivity data acquisition step of acquiring a relation between a change in the macroscopic cross sections and a change in the reactor core characteristics accompanying the change in the macroscopic cross sections, as sensitivity data;
a measurement data acquisition step of acquiring reactor core characteristics of the reactor core measured by a measurement apparatus measuring the reactor core characteristics, as reactor core characteristic measurement data;
an adjustment quantity derivation step of deriving an adjustment quantity of the macroscopic covariance data from a predetermined equation based on the sensitivity data; and
an adjusted macroscopic covariance derivation step of deriving adjusted macroscopic covariance data adjusted based on the adjustment quantity derived at the adjustment quantity derivation step.

7. A reactor core characteristic evaluation method of evaluating reactor core characteristics of a reactor core by a reactor core analysis apparatus configured to evaluate the reactor core characteristics of the reactor core by executing core calculations on the reactor core based on macroscopic cross sections,
perturbation quantities of the macroscopic cross sections derived based on the adjusted macroscopic covariance data derived by the macroscopic covariance adjustment method according to claim 6 being previously generated as adjusted macroscopic perturbation data,
the reactor core characteristic evaluation method executing:

a reactor core characteristic derivation step of executing the core calculations based on the adjusted macroscopic perturbation data, and deriving a plurality of reactor core characteristics individually corresponding to the perturbation quantities of the macroscopic cross sections; and
a reactor core characteristic covariance data generation step of generating reactor core characteristic covariance data that is data regarding uncertainties of the reactor core characteristics based on the reactor core characteristics derived at the reactor core characteristic derivation step.

8. A covariance data creation program executed by a covariance data creation apparatus configured to execute assembly calculations on a fuel assembly based on microscopic cross sections, the covariance data creation program comprising:

a perturbation data generation step of deriving a plurality of perturbation quantities of the microscopic cross sections based on microscopic covariance data that is data regarding uncertainties of the microscopic cross sections, and generating microscopic perturbation data from the derived perturbation quantities of the microscopic cross sections;
a macroscopic cross section derivation step of executing the assembly calculations based on the microscopic perturbation data generated at the perturbation data generation step, and deriving a plurality of macroscopic cross sections individually corresponding to the perturbation quantities of the microscopic cross sections; and
a macroscopic covariance data generation step of generating macroscopic covariance data that is data regarding uncertainties of the macroscopic cross sections based on the macroscopic cross sections derived at the macroscopic cross section derivation step.

9. A macroscopic covariance adjustment program executed by a reactor core analysis apparatus configured to execute core calculations on a reactor core based on macroscopic cross sections,
perturbation quantities of the macroscopic cross sections derived based on macroscopic covariance data that is data regarding uncertainties of the macroscopic cross sections being previously generated as macroscopic perturbation data,
the macroscopic covariance adjustment program comprising:

a reactor core characteristic derivation step of executing the core calculations based on the macroscopic perturbation data, and deriving a plurality of reactor core characteristics individually corresponding to the perturbation quantities of the macroscopic cross sections;

a sensitivity data acquisition step of acquiring a relation between a change in the macroscopic cross sections and a change in the reactor core characteristics accompanying the change in the macroscopic cross sections, as sensitivity data;

a measurement data acquisition step of acquiring reactor core characteristics of the reactor core measured by a measurement apparatus measuring the reactor core characteristics, as reactor core characteristic measurement data;

an adjustment quantity derivation step of deriving an adjustment quantity of the macroscopic covariance data from a predetermined equation based on the sensitivity data; and

an adjusted macroscopic covariance derivation step of deriving adjusted macroscopic covariance data adjusted based on the adjustment quantity derived at the adjustment quantity derivation step.

10. A reactor core characteristic evaluation program executed by a reactor core analysis apparatus configured to execute core calculations on a reactor core based on macroscopic cross sections,

perturbation quantities of the macroscopic cross sections derived based on the adjusted macroscopic covariance data derived by the macroscopic covariance adjustment program according to claim 9 being previously generated as adjusted macroscopic perturbation data,

the reactor core characteristic evaluation program comprising:

a reactor core characteristic derivation step of executing the core calculations based on the adjusted macroscopic perturbation data, and deriving a plurality of reactor core characteristics individually corresponding to the perturbation quantities of the macroscopic cross sections; and

a reactor core characteristic covariance data generation step of generating reactor core characteristic covariance data that is data regarding uncertainties of the reactor core characteristics based on the reactor core characteristics derived at the reactor core characteristic derivation step.

# FIG.1

COVARIANCE DATA CREATION APPARATUS 10

FIRST INPUT UNIT 13

FIRST OUTPUT UNIT 14

FIRST ARITHMETIC UNIT 11

FIRST STORAGE UNIT 12

C1

P1

# FIG.2

REACTOR CORE ANALYSIS APPARATUS 20

SECOND INPUT UNIT 23

SECOND OUTPUT UNIT 24

SECOND ARITHMETIC UNIT 21

SECOND STORAGE UNIT 22

C2

P2

P3

# FIG.3

# FIG.4

# FIG.5

START

ACQUIRE MICROSCOPIC COVARIANCE DATA ~S11

GENERATE MICROSCOPIC PERTURBATION DATA ~S12

EXECUTE ASSEMBLY CALCULATIONS BASED ON MICROSCOPIC PERTURBATION DATA ~S13

GENERATE MACROSCOPIC COVARIANCE DATA ~S14

GENERATE MACROSCOPIC PERTURBATION DATA ~S15

1

# FIG.6

(1)

| EXECUTE CORE CALCULATIONS BASED ON MACROSCOPIC PERTURBATION DATA | ~S21 |

| GENERATE SENSITIVITY DATA | ~S22 |

| ACQUIRE REACTOR CORE CHARACTERISTIC MEASUREMENT DATA | ~S23 |

| DERIVE ADJUSTMENT QUANTITY OF MACROSCOPIC COVARIANCE | ~S24 |

| GENERATE ADJUSTED MACROSCOPIC COVARIANCE DATA | ~S25 |

| GENERATE ADJUSTED MACROSCOPIC PERTURBATION DATA BASED ON ADJUSTED MACROSCOPIC COVARIANCE | ~S26 |

(2)

# FIG.7

② 

EXECUTE CORE CALCULATIONS BASED ON ADJUSTED MACROSCOPIC PERTURBATION DATA ~S31

GENERATE REACTOR CORE CHARACTERISTIC COVARIANCE DATA ~S32

END

## INTERNATIONAL SEARCH REPORT

| | International application No. |
|---|---|
| | PCT/JP2018/032378 |

### A. CLASSIFICATION OF SUBJECT MATTER
Int.Cl. G21C17/00(2006.01)i, G21C17/10(2006.01)i

According to International Patent Classification (IPC) or to both national classification and IPC

### B. FIELDS SEARCHED

Minimum documentation searched (classification system followed by classification symbols)
Int.Cl. G21C17/00, G21C17/10, G21C7/00, G21D3/00

| Documentation searched other than minimum documentation to the extent that such documents are included in the fields searched | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | 桐村一生他，PWR 炉心における核特性パラメータの不確かさ解析(3) 燃焼炉心に対する適用性検討，日本原子力学会「2014 年秋の大会」予稿集，N58，日本原子力学会，22 August 2014, p. 654, non-official translation (KIRIMURA, Kazuki et al., "Analysis (3) of uncertainty of nuclear characteristic parameter in reactor core of PWR: Review of applicability for cumbustion reactor core", Proceedings of the "2014 autumn annual conference" of Atomic Energy Society of Japan, N58, Atomic Energy Society of Japan) | 1–2 |
| Y | 大泉昭人他，軽水炉燃焼組成の核データ感度データベース，JAEA-Data/Code, 2013-019, 日本原子力研究開発機構，February 2014, pp. 1-6, (OIZUMI, Akito et al., "Database for Nuclear Data Sensitivity of Burnup Composition in Light Water Reactors", Japan Atomic Energy Agency) | 1–2 |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 November 2018 (16.11.2018) | 27 November 2018 (27.11.2018) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2018/032378

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2011-237228 A (MITSUBISHI HEAVY INDUSTRIES, LTD.) 24 November 2011, paragraphs [0001], [0025]-[0033] & KR 10-2011-0123646 A | 2 |
| A | JP 2016-156740 A (MITSUBISHI HEAVY INDUSTRIES, LTD.) 01 September 2016, entire text, all drawings (Family: none) | 1-10 |
| A | JP 2016-71421 A (TOSHIBA CORP.) 09 May 2016, entire text, all drawings (Family: none) | 1-10 |
| A | JP 2015-94746 A (TOSHIBA CORP.) 18 May 2015, entire text, all drawings (Family: none) | 1-10 |
| A | JP 2014-229283 A (TOSHIBA CORP.) 08 December 2014, entire text, all drawings (Family: none) | 1-10 |
| A | JP 2009-236727 A (HITACHI-GE NUCLEAR ENERGY, LTD.) 15 October 2009, entire text, all drawings (Family: none) | 1-10 |
| A | US 2015/0364225 A1 (KOREA HYDRO & NUCLEAR POWER CO., LTD.) 17 July 2015, entire text, all drawings (Family: none) | 1-10 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Cross section adjustment method based on random sampling technique. **TOMOAKI WATANABE et al.** Journal of Nuclear Science and Technology. Atomic Energy Society of Japan, 2014, vol. 51, 590-599